# EUROPEAN PATENT SPECIFICATION

(11) **EP 0 383 824 B1**
(45) Date of publication and mention of the grant of the patent: **22.12.1993**
(21) Application number: 88910228.1
(22) Date of filing: 19.10.1988
(51) Int. Cl.: F16J 15/02, H02G 3/00

(54) **BULKHEAD SEAL**
DICHTUNG FÜR SCHOTTEN
JOINT D'ETANCHEITE POUR CLOISON ETANCHE

(30) Priority: 20.10.1987 US 111963; 07.03.1988 US 164610
(43) Date of publication of application: 29.08.1990
(73) Proprietor: RAYCHEM CORPORATION, Menlo Park California 94025 (US)
(72) Inventor: ANDERSON, Milo, Dale, Carrollton, TX 75007 (US); HOLT, Neil, Lawrence, Redwood City, CA 94063 (US); LARSSON, Peter, Lars, Los Altos, CA 94022 (US); RICHARDSON, Anthony, R., W., Los Altos, CA 94022 (US)
(74) Representative: Jones, David Colin
(86) International application number: US8803762
(87) International publication number: WO8903952

(56) References cited:
- FR-A- 994 846
- GB-A- 774 662
- GB-A- 2 005 091
- GB-A- 2 088 653
- GB-A- 2 171 855
- US-A- 3 243 835
- US-A- 3 285 551
- US-A- 3 423 518
- US-A- 3 518 359
- US-A- 3 548 079
- US-A- 3 990 661
- US-A- 4 194 750
- USA Magazine (Insulation), published August 1969 /see p. 23)

## Description

This invention relates to a gas-tight seal between one or more elongate supply lines and a bulkhead aperture through which they pass and to a method and an assembly for providing such a seal.

When one or more elongate supply lines, such as pipes, wires, cables and the like, pass through an aperture in a bulkhead or the like, a path for the ingress of gas or other fluids may be created between the supply line and the wall of the aperture. Further, if one or more supply lines, such as wires or cables, pass through the same bulkhead aperture, gases and/or fluids may flow in the spaces between the supply lines. In certain situations, it may be undesirable for gases and/or fluids to pass from one side of the bulkhead to the other through such leak paths. For example, in a nuclear generating plant it is desirable to prevent steam from the cooling system from entering various electrical equipment, junction boxes or the like, where the steam may cause corrosion, condensation of moisture resulting in short circuits, or the like. It is thus important that supply lines such as electrical wires entering the equipment through a wall or bulkhead be sealed to prevent ingress of steam.

GB-A-2 171 855 discloses a cable entry seal in which a heat shrinkable sleeve that forms a flange is fitted over a cable that passes through a bulkhead. The flange may be formed integrally with the sleeve or by encasing a collar. In one embodiment, the flange is at one end of the sleeve, and the seal comprises a bulkhead sealing member and a rigid bush that threadedly and sealingly engage one another and retain the flange therebetween. The sealing member is threadedly secured in an aperture in the bulkhead. In another embodiment, the flange is formed by encasing a collar at an intermediate portion of the sleeve, and the cable is sealed on both sides of the bulkhead. A bush threadedly engages within an integral projection of the bulkhead and urges the flange against a shoulder thereof.

This invention provides a gas-tight seal between one or more elongate supply lines and a bulkhead aperture through which it passes and a method and an assembly for providing such a seal.

One aspect of this invention comprises a method of forming a gas-tight seal between an elongate supply line and an aperture in a bulkhead through which the supply line passes, which method comprises:
a. recovering a heat recoverable tubular article over said supply line, said tubular article having a radial flange extending from an intermediate portion thereof dividing said tubular article into first and second longitudinal regions;
b. positioning a first tubular fitting around the first region of the recovered article with one end thereof adjacent the flange;
c. sealingly engaging the other end of the first fitting with the aperture of the bulkhead;
d. positioning a second fitting around the second region of the recovered article, with one end thereof adjacent the flange so that the flange is positioned between said first and second fittings;
e. positioning a resilient annular member between said first fitting and said flange and in abutment with the latter;
f. positioning urging means between said second fitting and said flange and in abutment with the latter; and
g. providing means for retaining said first and second fittings in their respective positions, so that the urging means urge said flange, said resilient member and said first fitting into sealing engagement.

Another aspect of this invention comprises an assembly for forming a gas-tight seal between an elongate supply line and an aperture in a bulkhead through which the supply line passes, which assembly comprises:
a. a heat recoverable tubular article capable of being recovered onto said supply line and having a radial flange extending therefrom;
b. a first fitting adapted to be positioned around a first longitudinal region of the article after it has been recovered onto the supply line, one end of the first fitting being adapted to be sealingly secured to the bulkhead aperture;
c. a second fitting adapted to be positioned around the article after it has been recovered onto the supply line, one end thereof being locatable adjacent the flange so that the flange is positioned between said first and second fittings;
d. a resilient annular member adapted to be positioned between said first fitting and said flange; and
e. means for retaining said first and second fittings in their respective positions;
characterised in that:
f. the flange extends from an intermediate portion of the article, dividing the tubular article into the first longitudinal region and a second longitudinal region;
g. the second fitting is adapted to be positioned around the second region of the tubular article;
h. the other end of the first fitting is locatable adjacent the flange; and
i. urging means is adapted to be positioned between said second fitting and said flange to urge said flange, said resilient member and said first fitting into sealing engagement.

Figure 1 is a longitudinal cross-section view of a sealed feedthrough of this invention.

Figure 2 is a radial cross-section of the feedthrough of Figure 1 taken along the line 2-2'.

In accordance with this invention, a seal is provided between one or more elongate supply lines and an aperture in a bulkhead through which it passes. The term "elongate supply line" is used herein to mean any elongate article which conducts electricity, oil, water, other fluids or the like, and passes through a bulkhead. One or more supply lines may pass through a single aperture in the bulkhead. The term "bulkhead" is used to mean any wall through which the supply line passes, whether from a building, room, electrical equipment cabinet or box or the like. The preferred embodiment of the invention described herein is a feedthrough for a plurality of wires going through the wall of an electrical junction box in a nuclear generating plant where steam is to be prevented from reaching the electrical components within the box. It is to be understood that the invention is applicable to any supply line passing through any wall.

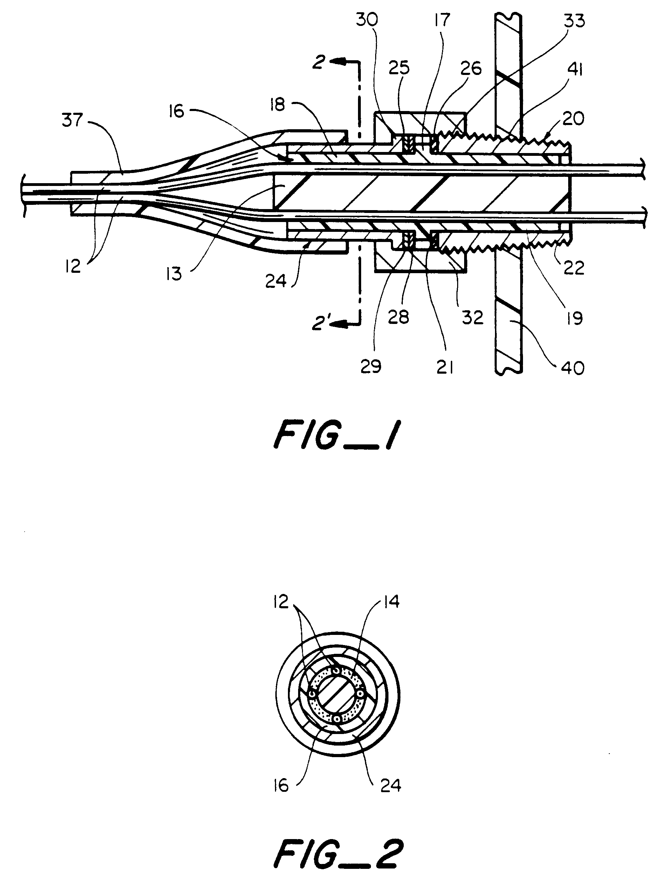

Referring now to the drawing, Figure 1 shows a sealed feedthrough in which insulated wires 12 pass through the wall 40 of a junction box (not shown). As shown in Figure 1 and 2, the individual wires 12 are arranged around a central rod 13, which is preferably polymeric, e.g. of polyethylene. Adhesive 14 fills the voids between the individual wires and the rod. The adhesive is preferably a hot melt adhesive, e.g. a polyamide or ethylene/vinyl acetate-based hot melt adhesive. Sleeve 16 surrounds the cables and the rod forming a gas-tight enclosure. Sleeve 16 has a radially extending flange 17 which divides the sleeve into two regions 18 and 19. Sleeve 16 is preferably a recovered, heat-recoverable polymeric tubular article, preferably of polyethylene or polyethylene blended with another polymeric material such as an ethylene/vinyl acetate copolymer. A first fitting 20 surrounds region 19 of the sleeve and end 21 of the first fitting abuts flange 17. The first fitting illustrated is a tapered metal transition nipple and is provided with threads 22 which are screwed in the mating threads 41 of the aperture. A sealing material, such as PTFE tape or pipe joint compound such as Neolube from Heron Industries Ltd. (not shown), is placed between the mating threaded portions. Other techniques of joining the fitting to the box can be used, for example, welding or soldering the fitting to the aperture, using the fitting and aperture shaped to provide an interference or press fit, or the like.

A second fitting 24 is positioned over region 18 of the sleeve, with end 25 abutting the flange. In the illustrated embodiment, the second fitting is a metal ferrule.

A resilient annular member 26 is positioned between the first fitting 20 and flange 17. The annular member is of a material such as an elastomer, preferably a silicone rubber. A flat washer 28 and a wave washer 29 are positioned between the flange 17 and the second fitting 24. The combination of these washers urges the flange, the resilient annular member and the first fitting into a gas-tight relationship. Other urging means may be used, for example a Belleville washer. The second fitting is provided with flange 30 and retaining clamp 32 fits over flange 30 and is threaded over the threads 33 of first fitting 20 to hold the first and second fittings in their respective positions maintaining the gas-tight seal between them. Other retaining means such as bolts, toggle clamps or the like may be used to hold the fittings together.

The end 36 of the second fitting 24 is sealed to the wires 12 by a second sleeve 37. The second sleeve may be a recovered, heat recoverable tubular polymeric article which tightly engages the end of the second fitting and the wires. Other enclosures can be used such as a convoluted conduit. The end 24 of the second fitting 24 can be adapted to interconnect with the enclosure selected.

The sealed feedthrough of Figure 1 is assembled by placing wires 12 around center rod 13 and placing a hot melt adhesive 14 around the wires and rod. Then heat recoverable sleeve 16 is positioned over the rod and wires and heat is applied to cause the sleeve to recover (i.e. shrink) onto the wires and rod. The heat also causes the hot melt adhesive to melt and flow so that in cooling the voids between the wires and the rod are filled with adhesive. Strips of glass fiber mats can be positioned around the center rod forming dams for preventing flow of the adhesive from under the heat recoverable sleeve. The glass fiber strips can also be positioned over the wires after they have been placed around the center rod. In the embodiment shown, four wires extend through the feedthrough. Depending on the particular application, more wires may be present and treated in a similar manner. If one wire or other supply line is used, the center rod may not be needed. The resilient member 26 is then placed next to flange 17 and the first fitting 20 is placed in position. The flat washer 28 and the wave washer 29 are then placed next to the other side of the flange 17 and the second fitting 24 is placed in position. Retaining clamp 32 is then installed over the first and second fittings. Heat recoverable sleeve 37 is positioned over the second fitting 24 and the wires and heat is applied to cause it to recover. The first fitting is then screwed into the aperture of the junction box wall 40.

## Claims

1. A method of forming a gas-tight seal between an elongate supply line (12) and an aperture in a bulkhead (40) through which the supply line (12) passes, which method comprises:
a. recovering a heat recoverable tubular article (16) over said supply line (12), said tubular article (16) having a radial flange (17) extending from an intermediate portion thereof dividing said tubular article (16) into first (19) and second (18) longitudinal regions;
b. positioning a first tubular fitting (20) around the first region (19) of the recovered article (16) with one end thereof adjacent the flange (17);
c. sealingly engaging the other end of the first fitting (20) with the aperture of the bulkhead (40);
d. positioning a second fitting (24) around the second region (18) of the recovered article (16), with one end thereof adjacent the flange (17) so that the flange (17) is positioned between said first (19) and second (18) fittings;
e. positioning a resilient annular member (26) between said first fitting (20) and said flange (17) and in abutment with the latter;
f. positioning urging means (28,29) between said second fitting (24) and said flange (17) and in abutment with the latter; and
g. providing means (32) for retaining said first (20) and second (24) fittings in their respective positions, so that the urging means (28,29) urge said flange (17), said resilient member (26) and said first fitting (20) into sealing engagement.

2. A method in accordance with Claim 1 wherein a plurality of supply lines (12) pass through said bulkhead (40) and said method further comprises applying adhesive (14) around each supply line (12) so that when heat is applied to recover the recoverable article (16) onto the supply lines (12), the adhesive (14) melts and flows, filling any voids between the supply lines (12), and between the supply lines (12) and the recovered article (16).

3. A method in accordance with Claim 1 wherein a plurality of supply lines (12) pass through said bulkhead (40) and said method further comprises positioning the supply lines (12) substantially uniformly around a central rod (13), applying adhesive (14) around the supply lines (12) so that when heat is applied to recover the recoverable article (16) onto the supply lines (12), the adhesive (14) melts and flows, filling any voids between the supply lines (12), the rod (13), and the recovered article (16).

4. A method in accordance with Claim 1 or Claim 2 which further comprises positioning an enclosure (37) over the supply line or supply lines (12) and securing one end of the enclosure (37) to said second fitting (24).

5. A method in accordance with Claim 4, wherein said enclosure (37) comprises a second heat recoverable tubular article and the method comprises recovering the enclosure (37) onto said supply line or supply lines (12) and said second fitting (24).

6. A method in accordance with Claim 1 wherein the first fitting (20) and the aperture have mating threaded sections (22,41) and said method further comprises screwing said first fitting (20) into the aperture.

7. A method in accordance with Claim 6 which further comprises positioning sealing material over at least one of said threaded sections (22, 41) prior to screwing said first fitting (20) into the aperture.

8. An assembly for forming a gas-tight seal between an elongate supply line (12) and an aperture in a bulkhead (40) through which the supply line (12) passes, which assembly comprises:
a. a heat recoverable tubular article (16) capable of being recovered onto said supply line (12) and having a radial flange (17) extending therefrom;
b. a first fitting (20) adapted to be positioned around a first longitudinal region (19) of the article (16) after it has been recovered onto the supply line (12), one end of the first fitting (20) being adapted to be sealingly secured to the bulkhead (40) aperture;
c. a second fitting (24) adapted to be positioned around the article (16) after it has been recovered onto the supply line (12), one end thereofbeing locatable adjacent the flange (17) so that the flange (17) is positioned between said first (20) and second (24) fittings;
d. a resilient annular member (26) adapted to be positioned between said first fitting (20) and said flange (17); and
e. means (32) for retaining said first (20) and second (24) fittings in their respective positions;
characterised in that:
f. the flange (17) extends from an intermediate portion of the article (16), dividing the tubular article (16) into the first longitudinal region (19) and a second longitudinal region (18);
g. the second fitting (24) is adapted to be positioned around the second region (18) of the tubular article (16);
h. the other end of the first fitting (20) is locatable adjacent the flange (17); and
i. urging means (28, 29) is adapted to be positioned between said second fitting (24) and said flange (17) to urge said flange (17), said resilient member (26) and said first fitting (20) into sealing engagement.

9. An assembly according to claim 8, wherein the retaining means (32) comprises a clamp that interengages the exterior of the first (20) and second (24) fittings.

10. An elongate supply line (12) sealed through an aperture in a bulkhead (40) by means of an assembly according to claim 8 or claim 9.

## Patentansprüche

1. Verfahren zum Herstellen einer gasdichten Dichtung zwischen einer langgestreckten Versorgungsleitung (12) und einer Öffnung in einer Trennwand (40), durch die sich die Versorgungsleitung (12) hindurch erstreckt, wobei das Verfahren folgende Schritte umfaßt:
a.) Rückstellen eines wärmerückstellbaren, rohrförmigen Gegenstandes (16) über der Versorgungsleitung (12), wobei der rohrförmige Gegenstand (16) einen radialen Flansch (17) aufweist, der sich von einem mittleren Bereich des Gegenstandes weg erstreckt und der den rohrförmigen Gegenstand (16) in einen ersten (19) und einen zweiten Längsbereich (18) teilt;
b.) Positionieren eines ersten rohrförmigen Anschlußstückes (20) um den ersten Bereich (19) des rückgestellten Gegenstandes (16) herum, wobei sich das eine Ende davon in der Nähe des Flansches (17) befindet;
c.) abdichtendes in-Eingriff-Bringen des anderen Endes des ersten Anschlußstückes (20) mit der Öffnung der Trennwand (40);
d.) Positionieren eines zweiten Anschlußstückes (24) um den zweiten Bereich (18) des rückgestellten Gegenstandes (16) herum, wobei das eine Ende davon sich in der Nähe des Flansches (17) befindet, so daß der Flansch (17) zwischen dem ersten (19) und dem zweiten Anschlußstück (18) positioniert ist;
e.) Positionieren eines elastischen ringförmigen Elementes (26) zwischen dem ersten Anschlußstück (20) und dem Flansch (17) sowie in Anlage an letzterem;
f.) Positionieren einer Drückeinrichtung (28, 29) zwischen dem zweiten Anschlußstück (24) und dem Flansch (17) sowie in Anlage an letzterem; und
g.) Vorsehen einer Einrichtung (32) zum Festhalten des ersten (20) und des zweiten Anschlußstücks (24) in ihren jeweiligen Positionen, so daß die Drückeinrichtung (28, 29) den Flansch (17), das elastische Element (26) und das erste Anschlußstück (20) in abdichtenden Eingriff miteinander drückt.

2. Verfahren nach Anspruch 1, wobei eine Vielzahl von Versorgungsleitungen (12) sich durch die Trennwand (40) hindurch erstreckt und das Verfahren weiterhin folgende Schritte umfaßt:
Aufbringen von Kleber (14) um jede Versorgungsleitung (12) herum, so daß dann, wenn Wärme aufgebracht wird, um den rückstellbaren Gegenstand (16) auf die Versorgungsleitungen (12) rückzustellen, der Kleber (14) schmilzt und fließt und dadurch jegliche Lücken zwischen den Versorgungsleitungen (12) sowie zwischen den Versorgungsleitungen (12) und dem rückgestellten Gegenstand (16) ausfüllt.

3. Verfahren nach Anspruch 1, wobei eine Vielzahl von Versorgungsleitungen (12) sich durch die Trennwand (40) hindurch erstreckt und das Verfahren weiterhin folgende Schritte umfaßt:
Positionieren der Versorgungsleitungen (12) im wesentlichen gleichmäßig um eine zentrale Stange (13) herum, Aufbringen von Kleber (14) um die Versorgungsleitungen (12) herum, so daß dann, wenn Wärme aufgebracht wird, um den rückstellbaren Gegenstand (16) auf die Versorgungsleitungen (12) rückzustellen, der Kleber (14) schmilzt und fließt und dadurch jegliche Lücken zwischen den Versorgungsleitungen (12), der Stange (13) und dem rückgestellten Gegenstand (16) ausfüllt.

4. Verfahren nach Anspruch 1 oder Anspruch 2,
wobei weiterhin eine Umhüllung (37) über der oder den Versorgungsleitungen (12) positioniert wird und ein Ende der Umhüllung (37) an dem zweiten Anschlußstück (24) befestigt wird.

5. Verfahren nach Anspruch 4,
wobei die Umhüllung (37) einen zweiten wärmerückstellbaren, rohrförmigen Gegenstand aufweist und wobei das Verfahren das Rückstellen der Umhüllung (37) auf die Versorgungsleitung oder die Versorgungsleitungen (12) und das zweite Anschlußstück (24) umfaßt.

6. Verfahren nach Anspruch 1,
wobei das erste Anschlußstück (20) und die Öffnung zueinander passende Gewindebereiche (22, 41) besitzen und wobei das Verfahren das Einschrauben des ersten Anschlußstückes (20) in die Öffnung umfaßt.

7. Verfahren nach Anspruch 6,
welches ferner das Positionieren von Dichtungsmaterial auf wenigstens einem der Gewindebereiche (22, 41) vor dem Einschrauben des ersten Anschlußstückes (20) in die Öffnung umfaßt.

8. Anordnung zum Herstellen einer gasdichten Dichtung zwischen einer langgestreckten Versorgungsleitung (12) und einer Öffnung in einer Trennwand (40), durch die sich die Versorgungsleitung (12) hindurch erstreckt, wobei die Anordnung folgendes aufweist:
a.) einen wärmerückstellbaren, rohrförmigen Gegenstand (16), der auf die Versorgungsleitung (12) rückstellbar ist und einen sich von diesem weg erstreckenden radialen Flansch (17) aufweist;
b.) ein erstes Anschlußstück (20), das um einen ersten Längsbereich (19) des Gegenstandes (16) herum positionierbar ist, nachdem er auf die Versorgungsleitung (12) rückgestellt worden ist, wobei das eine Ende des ersten Anschlußstückes (20) sich in abdichtender Weise in der Öffnung der Trennwand (40) befestigen läßt;
c.) ein zweites Anschlußstück (24), das um den Gegenstand (16) herum positionierbar ist, nachdem er auf die Versorgungsleitung (12) rückgestellt worden ist, wobei sich das eine Ende des Anschlußstückes (24) in der Nähe des Flansches (17) lokalisieren läßt, so daß der Flansch (17) zwischen dem ersten (20) und dem zweiten Anschlußstück (24) positioniert ist;
d.) ein elastisches ringförmiges Element (26), das zwischen dem ersten Anschlußstück (20) und dem Flansch (17) positionierbar ist; und
e.) eine Einrichtung (32) zum Festhalten des ersten (20) und des zweiten Anschlußstückes (24) in ihren jeweiligen Positionen,
dadurch gekennzeichnet,
f.) daß der Flansch (17) sich von einem mittleren Bereich des Gegenstandes (16) weg erstreckt und dadurch den rohrförmigen Gegenstand (16) in den ersten Längsbereich (19) und einen zweiten Längsbereich (18) unterteilt;
g.) daß das zweite Anschlußstück (24) um den zweiten Bereich (18) des rohrförmigen Gegenstandes (16) herum positionierbar ist;
h.) daß sich das andere Ende des ersten Anschlußstückes (20) in der Nähe des Flansches (17) lokalisieren läßt; und
i.) daß eine Drückeinrichtung (28, 29) zwischen dem zweiten Anschlußstück (24) und dem Flansch (17) positionierbar ist, um dadurch den Flansch (17), das elastische Element (26) und das erste Anschlußstück (20) in abdichtenden Eingriff miteinander zu drücken.

9. Anordnung nach Anspruch 8,
wobei die Festhalteeinrichtung (32) eine Klemme aufweist, die die Außenseiten des ersten (20) und des zweiten Anschlußstückes (24) gemeinsam in Eingriff hält.

10. Langgestreckte Vorsorgungsleitung (12), die durch eine Anordnung nach Anspruch 8 oder Anspruch 9 bei ihrer Erstreckung durch eine Öffnung in einer Trennwand (40) abgedichtet ist.

## Revendications

1. Procédé pour former un joint d'étanchéité aux gaz entre une ligne allongée (12) d'alimentation et une ouverture dans une cloison (40) dans laquelle passe la ligne d'alimentation (12), lequel procédé consiste :
a. à appliquer par reprise de forme un article tubulaire (16) doué de reprise de forme à chaud sur ladite ligne (12) d'alimentation, ledit article tubulaire (16) ayant une collerette radiale (17) faisant saillie d'une partie intermédiaire de cet article et divisant ledit article tubulaire (16) en première (19) et seconde (18) zones longitudinales ;
b. à positionner un premier raccord tubulaire (20) autour de la première zone (19) de l'article (16) ayant effectué une reprise de forme, de manière qu'une extrémité du raccord soit adjacente à la collerette (17) ;
c. à engager de façon étanche l'autre extrémité du premier raccord (20) avec l'ouverture de la cloison (40) ;
d. à positionner un second raccord (24) autour de la seconde zone (18) de l'article (16) ayant effectué une reprise de forme, une extrémité du second raccord étant adjacente à la collerette (17) de manière que la collerette (17) soit positionnée entre lesdits premier (19) et second (18) raccords ;
e. à positionner un élément annulaire élastique (26) entre ledit premier raccord (20) et ladite collerette (17) et en butée avec cette dernière :
f. à positionner des moyens de sollicitation (28, 29) entre ledit second raccord (24) et ladite collerette (17) et en butée avec cette dernière ; et
g. à prévoir un moyen (32) pour retenir lesdits premier (20) et second (24) raccords dans leurs positions respectives, de manière que les moyens de sollicitation (28, 29) sollicitent ladite collerette (17), ledit élément élastique (26) et ledit premier raccord (20) en engagement d'étanchéité.

2. Procédé selon la revendication 1, dans lequel plusieurs lignes (12) d'alimentation passent à travers ladite cloison (40) et ledit procédé consiste en outre à appliquer un adhésif (14) autour de chaque ligne (12) d'alimentation de manière que, lorsque de la chaleur est appliquée pour que l'article (16) doué de reprise de forme s'applique par reprise de forme sur les lignes d'alimentation, l'adhésif (14) fonde et coule, remplissant tous espaces vides entre les lignes (12) d'alimentation, et entre les lignes (12) d'alimentation et l'article (16) ayant effectué la reprise de forme.

3. Procédé selon la revendication 1, dans lequel plusieurs lignes (12) d'alimentation passent à travers ladite cloison (40) et ledit procédé consiste en outre à positionner les lignes (12) d'alimentation de façon sensiblement uniforme autour d'une tige centrale (13), à appliquer un adhésif (14) autour des lignes (12) d'alimentation afin que, lorsque de la chaleur est appliquée pour que l'article (16) doué de reprise de forme s'applique par reprise de forme sur les lignes (12) d'alimentation, l'adhésif (14) fonde et coule, remplissant tous espaces vides entre les lignes (12) d'alimentation, la tige (13) et l'article (16) ayant effectué la reprise de forme.

4. Procédé selon la revendication 1 ou la revendication 2, qui consiste en outre à positionner une enveloppe (37) sur la ligne d'alimentation ou les lignes d'alimentation (12), et à fixer une extrémité de l'enveloppe (37) audit second raccord (24).

5. Procédé selon la revendication 4, dans lequel ladite enveloppe (37) comprend un second article tubulaire doué de reprise de forme à chaud et le procédé consiste à appliquer par reprise de forme l'enveloppe (37) sur ladite ligne d'alimentation ou lesdites lignes d'alimentation (12) et ledit second raccord (24).

6. Procédé selon la revendication 1, dans lequel le premier raccord (20) et l'ouverture comportent des parties filetées complémentaires (22, 41) et ledit procédé consiste en outre à visser ledit premier raccord (20) dans l'ouverture.

7. Procédé selon la revendication 6, qui consiste en outre à positionner une matière d'étanchéité sur au moins l'une desdites parties filetées (22, 41) avant le vissage dudit premier raccord (20) dans l'ouverture.

8. Assemblage pour former un joint d'étanchéité aux gaz entre une ligne allongée (12) d'alimentation et une ouverture dans une cloison (40) à travers laquelle passe la ligne (12) d'alimentation, lequel assemblage comporte :
a. un article tubulaire (16) doué de reprise de forme à chaud pouvant être appliqué par reprise de forme sur ladite ligne (12) d'alimentation et ayant une collerette radiale (17) qui en fait saillie ;
b. un premier raccord (20) destiné à être positionné autour d'une première zone longitudinale (19) de l'article (16) après qu'il a été appliqué par reprise de forme sur la ligne (12) d'alimentation, une extrémité du premier raccord (20) étant destinée à être fixée de façon étanche à l'ouverture de la cloison (40) :
c. un second raccord (24) destiné à être positionné autour de l'article (16) après qu'il a été appliqué par reprise de forme sur la ligne (12) d'alimentation, une extrémité de ce second raccord pouvant être placée à proximité immédiate de la collerette (17) afin que la collerette (17) soit positionnée entre lesdits premier (20) et second (24) raccords ;
d. un élément annulaire élastique destiné à être positionné entre ledit premier raccord (20) et ladite collerette (17) ; et
e. un moyen (32) destiné à retenir lesdits premier (20) et second (24) raccords dans leurs positions respectives ;
caractérisé en ce que :
f. la collerette (17) fait saillie d'une partie intermédiaire de l'article (16), divisant l'article tubulaire (16) en la première zone longitudinale (19) et une seconde zone longitudinale (18) ;
g. le second raccord (24) est destiné à être positionné autour de la seconde zone (18) de l'article tubulaire (16) ;
h. l'autre extrémité du premier raccord (20) peut être placée à proximité immédiate de la collerette (17) ; et
i. des moyens de sollicitation (28, 29) sont destinés à être positionnés entre ledit second raccord (24) et ladite collerette (17) pour solliciter ladite collerette (17), ledit élément élastique (26) et ledit premier raccord (20) en engagement d'étanchéité.

9. Assemblage selon la revendication 8, dans lequel le moyen de retenue (32) comporte une bride qui engage entre elles les surfaces extérieures des premier (20) et second (24) raccords.

10. Ligne allongée (12) d'alimentation montée de façon étanche dans une ouverture d'une cloison (40) au moyen d'un assemblage selon la revendication 8 ou la revendication 9.
